# EUROPÄISCHE PATENTSCHRIFT

(11) **EP 3 892 085 B1**
(45) Veröffentlichungstag und Bekanntmachung des Hinweises auf die Patenterteilung: **03.04.2024**
(21) Anmeldenummer: 21167378.5
(22) Anmeldetag: 08.04.2021
(51) Int. Cl.: A01D 78/10

(54) **VERFAHREN ZUM BETREIBEN EINES MEHRKREISELSCHWADERS SOWIE MEHRKREISELSCHWADER**
MULTIPLE WINDROW AND METHOD FOR OPERATING A MULTIPLE WINDROW
PROCÉDÉ DE FONCTIONNEMENT D'UNE ANDAINEUSE MULTIROTATIVE ET ANDAINEUSE MULTIROTATIVE

(30) Priorität: 08.04.2020 AT 502992020
(43) Veröffentlichungstag der Anmeldung: 13.10.2021
(73) Patentinhaber: PÖTTINGER Landtechnik GmbH, 4710 Grieskirchen (AT)
(72) Erfinder: EDELBAUER, Roland, 4710 Grieskirchen (AT); JUNGREITHMAYER, Martin, 4710 Grieskirchen (AT); SCHIMPF, Sebastian, 4710 Grieskirchen (AT); KLEESADL, Gerhard, 4710 Grieskirchen (AT)
(74) Vertreter: Burger, Hannes

(56) Entgegenhaltungen:
- EP-A1- 1 433 372
- EP-A1- 3 254 553
- DE-A1-102009 034 422
- DE-U1-202009 004 721

## Beschreibung

Die Erfindung betrifft ein Verfahren zum Betreiben eines Mehrkreiselschwaders, sowie einen Mehrkrei sei schwader.

Bei der Futterernte ist es üblich, das Erntegut, wie etwa bereits gemähtes Gras, mithilfe einer landwirtschaftlichen Maschine durch eine Arbeitsgerätekombination aus einem Zugfahrzeug und einem Schwader zu bearbeiten. Dabei wird das Erntegut vom Schwader als Schwad auf der landwirtschaftlichen Nutzfläche abgelegt, um diese mit einem Ladewagen aufnehmen und abtransportieren zu können. Der Schwader kann beispielsweise mehrere Rechkreisel aufweisen, welche zum Rechen des Erntegutes zur Schwad dienen. Beispielsweise umfassen die Rechkreisel jeweils einen Kreiselkopf und mehrere umfänglich daran angeordnete Zinkenarme. Von den Enden der Zinkenarme stehen jeweils mehrere Zinken zum Boden hin ab. Durch die Drehbewegung der Rechkreisel wird das auf der landwirtschaftlichen Nutzfläche verteilte Erntegut zum Schwad zusammengerecht. Der Vorgang dieses Zusammenrechens wird üblicherweise als Schwaden bezeichnet.

Die EP1095555B1 offenbart ein Verfahren zum Betreiben eines Vierkreiselschwaders mit einem rechten vorderen Rechkreisel, einem rechten hinteren Rechkreisel, einem linken vorderen Rechkreisel und einem linken hinteren Rechkreisel. Zur Bereitstellung von höheren Leistungen ist eine Verstellung der Arbeitsbreite des Vierkreiselschwaders vorgesehen, wobei die einzelnen Rechkreisel quer zu einer Arbeitsfahrtrichtung relativ zum Tragrahmen verschiebbar sind.

Das aus der EP1095555B1 bekannte Verfahren weist den Nachteil auf, dass bei falsch gewählten Einstellungen der Arbeitsbreite des Vierkreiselschwaders teile des Erntegutes von den Rechkreiseln nicht erfasst werden können, was zu partiellen Ernteausfällen führen kann.

Die EP 1433372 A1 offenbart einen Kreiselschwader mit gestaffelt angeordneten Schwadkreiseln. Die Schwadkreiseln sind derart angeordnet, dass diese in einer V-förmigen Anordnung nach vorne hin in Fahrtrichtung offen in wenigstens drei Staffelreihen hintereinander angeordnet sind, wobei wenigstens eine Staffelreihe hinter einem Fahrwerk und wenigstens zwei Staffelreihen vor einem Fahrwerk angeordnet sind, und dabei wenigstens die Staffelreihen vor dem Fahrwerk über längenveränderbare Ausleger verfügen. In einer weiteren Ausgestaltung der Erfindung verfügen die Ausleger sämtlicher Staffelreihen über längenveränderbare Ausleger. Dabei sind die längenveränderbaren Ausleger vorzugsweise als teleskopierbare Ausleger ausgestaltet, deren Stellantriebe zum Ein- bzw. Ausfahren vorzugsweise in an sich bekannter Weise von Hydraulikzylindern gebildet werden.

Aufgabe der vorliegenden Erfindung war es, die Nachteile des Standes der Technik zu überwinden und ein verbessertes Verfahren zum Betreiben eines Mehrkreiselschwaders, sowie einen verbesserten Mehrkreiselschwader zur Verfügung zu stellen.

Diese Aufgabe wird durch eine Vorrichtung und ein Verfahren gemäß den Ansprüchen gelöst.

Erfindungsgemäß ist ein Verfahren zum Betreiben eines Mehrkreiselschwaders vorgesehen. Der Mehrkreiselschwader umfasst:
- einem Tragrahmen und daran angeordnet zumindest ein linkes Laufrad und zumindest ein rechtes Laufrad;
- einen in einer Arbeitsfahrtrichtung rechten vorderen Rechkreisel;
- einen in der Arbeitsfahrtrichtung rechten hinteren Rechkreisel;
- einen in der Arbeitsfahrtrichtung linken vorderen Rechkreisel;
- einen in der Arbeitsfahrtrichtung linken hinteren Rechkreisel;
- einer Steuerung;
- eine Bedienerschnittstelle zum Eingeben von Eingabebefehlen, wobei die Bedienerschnittstelle mit der Steuerung gekoppelt ist,

wobei ein Mittelpunkt des rechten vorderen Rechkreisels und ein Mittelpunkt des linken vorderen Rechkreisels in einem vorderen Rechkreiselabstand zueinander beabstandet angeordnet sind, wobei eine vordere Rechkreiselabstandsensorik zur Erfassung des vorderen Rechkreiselabstandes ausgebildet ist und
wobei ein Mittelpunkt des rechten hinteren Rechkreisels und ein Mittelpunkt des linken hinteren Rechkreisels in einem hinteren Rechkreiselabstand zueinander beabstandet angeordnet sind, wobei eine hintere Rechkreiselabstandsensorik zur Erfassung des hinteren Rechkreiselabstandes ausgebildet ist.

Das Verfahren umfasst die Verfahrensschritte:
- Überführen des Mehrkreiselschwaders in einen Zustand, in dem sich alle vier Rechkreisel in einer Arbeitsstellung befinden;
- Erfassen des vorderen Rechkreiselabstandes mittels der vorderen Rechkreiselabstandsensorik und Erfassen des hinteren Rechkreiselabstandes mittels der hinteren Rechkreiselabstandsensorik und daraus berechnen einer Rechkreiselüberdeckung mittels der Steuerung.

Das erfindungsgemäße Verfahren bringt den Vorteil mit sich, dass die Information der Rechkreiselüberdeckung beispielsweise einem Maschinenbediener angezeigt werden kann, sodass dieser den hinteren Rechkreiselabstand an den vorderen Rechkreiselabstand angepasst einstellen kann. Darüber hinaus kann die Information der Rechkreiselüberdeckung zum weiteren Beeinflussen der Steuerung verwendet werden. Durch diese Maßnahmen können verbesserte Schwaderergebnisse erzielt werden, wodurch Ernteverluste oder partielle Ernteausfälle möglichst hintangehalten werden.

Weiters kann es zweckmäßig sein, wenn zusätzlich folgender Verfahrensschritt ausgeführt wird:
- Durchführen einer Befehlseingabe in die Bedienerschnittstelle zum Vergrößern des vorderen Rechkreiselabstandes, wobei die Vergrößerung des vorderen Rechkreiselabstandes in Abhängigkeit vom hinteren Rechkreiselabstand elektronisch begrenzt ist, sodass eine vordefinierte minimale Rechkreiselüberdeckung zwischen den vorderen Rechkreisel und den hinteren Rechkreisel nicht unterschritten wird. Dies bringt den Vorteil mit sich, dass der Maschinenbediener wie gewohnt den vorderen Rechkreiselabstand und somit die Arbeitsbreite des Mehrkreiselschwaders einstellen kann, ohne sich dabei auf die notwendige Rechkreiselüberdeckung konzentrieren zu müssen, wodurch Ernteverluste hintangestellt werden können. Darüber hinaus kann durch diese Maßnahme die Arbeitssicherheit beim Schwaden gesteigert werden, da durch die Rechnerunterstützung die Aufmerksamkeit des Maschinenbedieners nicht von sicherheitsrelevanten Verfahrensschritten abgelenkt wird.

Ferner kann vorgesehen sein, dass zusätzlich folgender Verfahrensschritt ausgeführt wird:
- Durchführen einer Befehlseingabe in die Bedienerschnittstelle zum Verkleinern des hinteren Rechkreiselabstandes, wobei die Verkleinerung des hinteren Rechkreiselabstandes in Abhängigkeit vom vorderen Rechkreiselabstand elektronisch begrenzt ist, sodass eine vordefinierte minimale Rechkreiselüberdeckung zwischen den vorderen Rechkreisel und den hinteren Rechkreisel nicht unterschritten wird. Dies bringt den Vorteil mit sich, dass der Maschinenbediener wie gewohnt den vorderen Rechkreiselabstand und somit die Arbeitsbreite des Mehrkreiselschwaders einstellen kann, ohne sich dabei auf die notwendige Rechkreiselüberdeckung konzentrieren zu müssen, wodurch Ernteverluste hintangestellt werden können. Darüber hinaus kann durch diese Maßnahme die Arbeitssicherheit beim Schwaden gesteigert werden, da durch die beschriebenen Maßnahmen die Aufmerksamkeit des Maschinenbedieners nicht oder nur möglichst wenig von sicherheitsrelevanten Verfahrensschritten, wie dem Lenken des Zugfahrzeuges, abgelenkt wird.

Darüber hinaus kann vorgesehen sein, dass bei Erreichen der vordefinierten minimalen Rechkreiselüberdeckung ein optisches und/oder akustisches Signal ausgegeben wird. Dies bringt den Vorteil mit sich, dass der Maschinenbediener einfach und wirksam über das Erreichen der vordefinierten, minimalen Rechkreiselüberdeckung informiert werden kann. Somit braucht sich der Maschinenbediener beim Bedienen des Mehrkreiselschwaders nicht auf die aktuelle vorliegende Rechkreiselüberdeckung konzentrieren.

Vorteilhaft ist auch eine Ausprägung, gemäß welcher vorgesehen sein kann, dass zusätzlich folgender Verfahrensschritt ausgeführt wird:
- Durchführen einer Befehlseingabe in die Bedienerschnittstelle zum Verkleinern des hinteren Rechkreiselabstandes, wobei bei der Verkleinerung des hinteren Rechkreiselabstandes automatisiert der vordere Rechkreiselabstand verkleinert wird, sodass eine vordefinierte minimale Rechkreiselüberdeckung zwischen den vorderen Rechkreisel und den hinteren Rechkreisel nicht unterschritten wird. Dies bringt den Vorteil mit sich, dass die minimale Rechkreiselüberdeckung automatisiert angehalten wird. Somit kann ausgeschlossen werden, dass aufgrund einer zu geringen Rechkreiselüberdeckung Ernteverluste entstehen. Darüber hinaus muss sich der Maschinenbediener durch diese Maßnahme nicht auf die Rechkreiselüberdeckung konzentrieren, wodurch die Maschinensicherheit gesteigert werden kann.

Gemäß einer Weiterbildung ist es möglich, dass zusätzlich folgender Verfahrensschritt ausgeführt wird:
- Durchführen einer Befehlseingabe in die Bedienerschnittstelle zum Vergrößern des vorderen Rechkreiselabstandes, wobei bei der Vergrößerung des vorderen Rechkreiselabstandes automatisiert der hintere Rechkreiselabstand vergrößert wird, sodass eine vordefinierte minimale Rechkreiselüberdeckung zwischen den vorderen Rechkreisel und den hinteren Rechkreisel nicht unterschritten wird. Dies bringt den Vorteil mit sich, dass die minimale Rechkreiselüberdeckung automatisiert angehalten wird. Somit kann ausgeschlossen werden, dass aufgrund einer zu geringen Rechkreiselüberdeckung Ernteverluste entstehen. Darüber hinaus muss sich der Maschinenbediener durch diese Maßnahme nicht auf die Rechkreiselüberdeckung konzentrieren, wodurch die Maschinensicherheit gesteigert werden kann.

Ferner kann es zweckmäßig sein, wenn die vordere Rechkreiselabstandsensorik zumindest einen ersten Induktivsensor und einen zweiten Induktivsensor umfasst, wobei mittels der zumindest zwei Induktivsensoren zumindest vier verschiedene Werte von Rechkreiselabständen erfasst werden. Dies bringt den Vorteil mit sich, dass derartige Induktivsensoren einfach und robust ausgebildet sein können und der Rechkreiselabstand mittels derartigen Induktivsensoren mit einer ausreichenden Genauigkeit erfasst werden kann. Insbesondere ist es hierbei denkbar, dass beispielsweise zwei Induktivsensoren ausgebildet sind, welche jeweils zum Erfassen eines binären Signals, wie etwa Material vorhanden oder Material nicht vorhanden, dienen. Mit den zwei Induktivsensoren können zwei Messleisten zusammenwirken, wobei die beiden Messleisten Ausnehmungen aufweisen, welche derart angeordnet sind, dass von den Induktivsensoren verschiedene binäre Zustände erfasst werden, welche jeweils einen Rechkreiselabstand bzw. einen Bereich eines Rechkreiselabstands repräsentieren. Hierbei sind bezüglich der Materialaussparungen folgende Zustände der Induktivsensoren möglich, wobei jeweils der Wert Null eine Materialaussparung repräsentiert und der Wert 1 das Vorhanden sein von Material repräsentiert: 0,0 - 0,1 - 1,0 - 1,1

Darüber hinaus kann vorgesehen sein, dass beim Fahren einer Kurve der vordere Rechkreiselabstand, insbesondere in Abhängigkeit von einer Stärke der Kurve, automatisiert verkleinert wird. Dies bringt den Vorteil mit sich, dass auch beim Fahren einer Kurve die notwendige minimale Rechkreiselüberdeckung gewährleistet werden kann, wobei dies automatisiert erfolgt und der Maschinenbediener somit seine Konzentration auf andere Aspekte des Arbeitsablaufes richten kann.

Weiters kann vorgesehen sein, wenn eine Stärke der gefahrenen Kurve durch Ermittlung eines Lenkwinkeleinschlages eines Zugfahrzeuges oder
durch Erfassung eines Knickwinkels des Zugfahrzeuges relativ zum Tragrahmen mittels eines Winkelsensors oder
durch Auswertung einer Wegdifferenz zwischen einem linken Wegmesssensor und einem rechten Wegmesssensor ermittelt wird,
wobei der vordere Rechkreiselabstand auf Basis der ermittelten Stärke der gefahrenen Kurve eingestellt wird. Durch diese Maßnahme kann die Stärke der gefahrenen Kurve einfach und mit geringer Fehleranfälligkeit ermittelt werden.

Gemäß einer besonderen Ausprägung ist es möglich, dass beim Fahren der Kurve ausschließlich der kurveninnere vordere Rechkreisel in Richtung zum Tragrahmen gezogen wird. Dies bringt den Vorteil mit sich, dass trotz Sicherstellung der minimalen Rechkreiselüberdeckung die Arbeitsbreite möglichst groß gehalten werden kann.

Erfindungsgemäß ist ein Mehrkreiselschwader ausgebildet, welcher folgende Bauteile umfasst:
- einem Tragrahmen und daran angeordnet zumindest ein linkes Laufrad und zumindest ein rechtes Laufrad;
- einen in einer Arbeitsfahrtrichtung rechten vorderen Rechkreisel;
- einen in der Arbeitsfahrtrichtung rechten hinteren Rechkreisel;
- einen in der Arbeitsfahrtrichtung linken vorderen Rechkreisel;
- einen in der Arbeitsfahrtrichtung linken hinteren Rechkreisel;
- einer Steuerung;
- eine Bedienerschnittstelle zum Eingeben von Eingabebefehlen, wobei die Bedienerschnittstelle mit der Steuerung gekoppelt ist,

wobei ein Mittelpunkt des rechten vorderen Rechkreisels und ein Mittelpunkt des linken vorderen Rechkreisels in einem vorderen Rechkreiselabstand zueinander beabstandet angeordnet sind, wobei eine vordere Rechkreiselabstandsensorik zur Erfassung des vorderen Rechkreiselabstandes ausgebildet ist und
wobei ein Mittelpunkt des rechten hinteren Rechkreisels und ein Mittelpunkt des linken hinteren Rechkreisels in einem hinteren Rechkreiselabstand zueinander beabstandet angeordnet sind, wobei eine hintere Rechkreiselabstandsensorik zur Erfassung des hinteren Rechkreiselabstandes ausgebildet ist.

Die Steuerung ist zum Durchführen des obig beschriebenen Verfahrens ausgebildet bzw. umfasst die Steuerung Befehle zum Durchführen des obig beschriebenen Verfahrens.

Der erfindungsgemäße Mehrkreiselschwader bringt den Vorteil mit sich, dass die Information der Rechkreiselüberdeckung beispielsweise einem Maschinenbediener angezeigt werden kann, sodass dieser den hinteren Rechkreiselabstand an den vorderen Rechkreiselabstand angepasst einstellen kann. Darüber hinaus kann die Information der Rechkreiselüberdeckung zum weiteren Beeinflussen der Steuerung verwendet werden. Durch diese Maßnahmen können verbesserte Schwaderergebnisse erzielt werden, wodurch Ernteverluste oder partielle Ernteausfälle möglichst hintangehalten werden.

Insbesondere kann es vorteilhaft sein, wenn ein erster Ausschubaktor ausgebildet ist, mittels welchem der vordere Rechkreiselabstand verstellbar ist und dass ein zweiter Ausschubaktor ausgebildet ist, mittels welchem der hintere Rechkreiselabstand verstellbar ist. Mittels der Ausschubaktoren lässt sich der Rechkreiselabstand einfach einstellen.

Ferner kann vorgesehen sein, dass der rechte vordere Rechkreisel mittels des ersten Ausschubaktors verschiebbar ist und dass der rechte hintere Rechkreisel mittels des zweiten Ausschubaktors verschiebbar ist und dass ein dritter Ausschubaktor ausgebildet ist, mittels welchem der linke vordere Rechkreisel verschiebbar ist und dass ein vierter Ausschubaktor ausgebildet ist, mittels welchem der linke hintere Rechkreisel verschiebbar ist. Dies bringt den Vorteil mit sich, dass jeder der einzelnen Rechkreisel einzeln mittels eines der jeweils zugeordneten Ausschubaktuatoren verschiebbar ist.

In einer alternativen Ausführungsvariante kann vorgesehen sein, dass der erste Ausschubaktor über eine mechanische Kopplung, wie etwa zwei Zahnstangen, welche durch ein dazwischen liegendes Zahnrad gegenläufig miteinander gekoppelt sind, zum gleichzeitigen gegenläufigen Verstellen des linken vorderen Rechkreisels und des rechten vorderen Rechkreisels dient. Analog dazu kann vorgesehen sein, dass der zweite Ausschubaktor zum gleichzeitigen gegengleichen Verschieben des linken hinteren Rechkreisels und des rechten hinteren Rechkreisels dient.

Erfindungsgemäß ist auch ein Computerprogramm ausgebildet, welches Befehle umfasst, die bei der Ausführung des Programms durch eine Steuerung, diese veranlassen, die Schritte des obig beschriebenen Verfahrens durchzuführen.

Erfindungsgemäß ist ein Computerlesbares Speichermedium ausgebildet, welches Befehle umfasst, die bei der Ausführung durch eine Steuerung diese veranlassen, die Schritte des obig beschriebenen Verfahrens durchzuführen.

Die Bedienerschnittstelle im Sinne dieses Dokumentes kann beispielsweise ein Bedienpult, einen Joystick oder dergleichen umfassen, welche physische Eingabemittel, wie etwa Eingabetaster aufweisen. Die Bedienerschnittstelle im Sinne dieses Dokumentes kann beispielsweise auch einen Touch-screen umfassen. Die Bedienerschnittstelle im Sinne dieses Dokumentes kann beispielsweise auch auditive Sensoren zur mündlichen Befehlseingabe umfassen. Die Bedienerschnittstelle im Sinne dieses Dokumentes kann beispielsweise auch optische Sensoren zur Gesteneingabe umfassen. Die Bedienerschnittstelle im Sinne dieses Dokumentes kann beispielsweise auch Elektroden zum Messen von Hirnströmen des Maschinenbedieners umfassen. Natürlich ist es auch denkbar, dass die Bedienerschnittstelle eine Kombination aus den obig beschriebenen Einheiten umfasst.

Durch Verstellen des vorderen Rechkreiselabstandes kann die maximale Arbeitsbreite des Mehrkreiselschwaders angepasst werden.

Durch Verstellen des hinteren Rechkreiselabstandes kann die Schwadbreite angepasst werden.

Ein Mehrkreiselschwader im Sinne dieses Dokumentes ist ein Schwader, welcher zumindest vier Rechkreisel aufweist. Ein Mehrkreiselschwader mit vier Rechkreisel wird als Vierkreiselschwader bezeichnet. Als Mehrkreiselschwader im Sinne dieses Dokumentes wird auch ein Schwader mit mehr als vier Rechkreisel, beispielsweise sechs Rechkreisel, acht Rechkreisel usw. bezeichnet.

Das erfindungsgemäße Verfahren ist in den Ausführungsbeispielen anhand eines Vierkreiselschwaders beschrieben. Bei einem Sechskreiselschwader oder einem sonstigen Mehrkreiselschwader sind zusätzlich zu den in den Ausführungsbeispielen beschriebenen vier Rechkreisel, weitere Rechkreiselpaare vorhanden, wobei das verzögerte Anheben dieser zusätzlichen Rechkreisel mutatis mutandis zu den beschriebenen Ausführungsbeispielen erfolgt.

Zum besseren Verständnis der Erfindung wird diese anhand der nachfolgenden Figuren näher erläutert.

Es zeigen jeweils in stark vereinfachter, schematischer Darstellung:
- Fig. 1: eine Draufsicht auf ein erstes Ausführungsbeispiel eines Vierkreiselschwaders mit einem Zugfahrzeug;
- Fig. 2: ein erstes Ausführungsbeispiel einer Bedienerschnittstelle;
- Fig. 3: einen Vierkreiselschwader in der Feldbearbeitung in einer Draufsicht;
- Fig. 4: schematische Darstellung einer Rechkreiselabstandsensorik.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

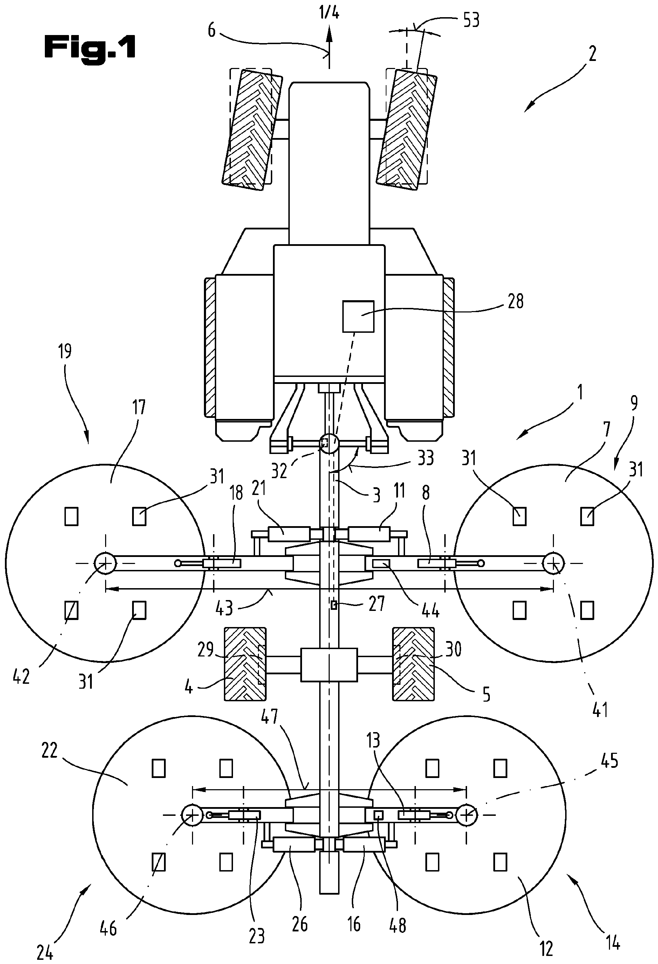

Fig. 1 zeigt in einer Draufsicht eine schematische Darstellung eines Ausführungsbeispiels eines Mehrkreiselschwaders 1 in Form eines Vierkreiselschwaders 1, welcher an ein Zugfahrzeug 2 gekoppelt ist.

Der Vierkreiselschwader 1 umfasst einen Tragrahmen 3 an welchem ein linkes Laufrad 4 und ein rechtes Laufrad 5 angeordnet sind. Im Arbeitsbetrieb wird der Vierkreiselschwader 1 vom Zugfahrzeug 2 in einer Arbeitsfahrtrichtung 6 gezogen.

Der Vierkreiselschwader 1 umfasst einen rechten vorderen Rechkreisel 7, welcher mittels eines ersten Hubaktors 8 zwischen einer Arbeitsstellung 9 und einer Hubstellung 10 verstellbar ist.

Darüber hinaus ist ein erster Ausschubaktor 11 ausgebildet, mittels welchem der rechte vordere Rechkreisel 7 quer zur Arbeitsfahrtrichtung 6 relativ zum Tragrahmen 3 verschiebbar ist.

Der Vierkreiselschwader 1 umfasst außerdem einen rechten hinteren Rechkreisel 12, welcher mittels eines zweiten Hubaktors 13 zwischen einer Arbeitsstellung 14 und einer Hubstellung 15 verstellbar ist.

Darüber hinaus ist ein zweiter Ausschubaktor 16 ausgebildet, mittels welchem der rechte hintere Rechkreisel 12 quer zur Arbeitsfahrtrichtung 6 relativ zum Tragrahmen 3 verschiebbar ist.

Der Vierkreiselschwader 1 umfasst außerdem einen linken vorderen Rechkreisel 17, welcher mittels eines dritten Hubaktors 18 zwischen einer Arbeitsstellung 19 und einer Hubstellung 20 verstellbar ist.

Darüber hinaus ist ein dritter Ausschubaktor 21 ausgebildet, mittels welchem der linke vordere Rechkreisel 17 quer zur Arbeitsfahrtrichtung 6 relativ zum Tragrahmen 3 verschiebbar ist.

Der Vierkreiselschwader 1 umfasst außerdem einen linken hinteren Rechkreisel 22, welcher mittels eines vierten Hubaktors 23 zwischen einer Arbeitsstellung 24 und einer Hubstellung 25 verstellbar ist.

Darüber hinaus ist ein vierter Ausschubaktor 26 ausgebildet, mittels welchem der linke hintere Rechkreisel 22 quer zur Arbeitsfahrtrichtung 6 relativ zum Tragrahmen 3 verschiebbar ist.

Ein Mittelpunkt 41 des rechten vorderen Rechkreisels 7 und ein Mittelpunkt 42 des linken vorderen Rechkreisels 17 sind in einem vorderen Rechkreiselabstand 43 zueinander beabstandet angeordnet.

Weiters ist eine vordere Rechkreiselabstandsensorik 44 zur Erfassung des vorderen Rechkreiselabstandes 43 ausgebildet.

Ein Mittelpunkt 45 des rechten hinteren Rechkreisels 12 und ein Mittelpunkt 46 des linken hinteren Rechkreisels 22 sind in einem hinteren Rechkreiselabstand 47 zueinander beabstandet angeordnet.

Weiters ist eine hintere Rechkreiselabstandsensorik 48 zur Erfassung des hinteren Rechkreiselabstandes 47 ausgebildet.

Die vordere Rechkreiselabstandsensorik 44 bzw. die hintere Rechkreiselabstandsensorik 48 kann beispielsweise den Absolutabstand der jeweiligen rechten Rechkreisel 7, 12 und linken Rechkreisel 17, 22 zueinander erfassen. In einer alternativen Ausführungsvariante ist es auch denkbar, dass die vordere Rechkreiselabstandsensorik 44 bzw. die hintere Rechkreiselabstandsensorik 48 nur die Position des jeweiligen rechten Rechkreisels 7, 12 oder des jeweiligen linken Rechkreisels 17, 22 erfasst und dadurch der vordere Rechkreiselabstand 43 bzw. der hintere Rechkreiselabstand 47 berechnet wird.

Der Vierkreiselschwader 1 umfasst darüber hinaus eine Steuerung 27, welche zum Ansteuern der Hubaktoren 8, 13, 18, 23 bzw. der Ausschubaktoren 11, 16, 21, 26 dient. Die Steuerung 27 ist mit einer Bedienerschnittstelle 28 gekoppelt, welche zum Eingeben von Befehlen in die Steuerung 27 dient. Die Steuerung 27 kann entweder am Zugfahrzeug 2 oder am Vierkreiselschwader 1 angeordnet sein. Die Bedienerschnittstelle 28 ist vorzugsweise im Zugfahrzeug 2 angeordnet.

In einer ersten Ausführungsvariante ist es denkbar, dass die Steuerung 27 und/oder die Bedienerschnittstelle 28 eigens für den Vierkreiselschwader 1 ausgebildet sind und somit integraler Bestandteil des Vierkreiselschwaders 1 sind. In einer weiteren Ausführungsvariante ist es auch denkbar, dass die Steuerung 27 und/oder die Bedienerschnittstelle 28 integraler Bestandteil des Zugfahrzeuges 2 sind und der Vierkreiselschwader 1 mittels einer genormten Datenverbindungsschnittstelle, wie etwa einem ISOBUS entsprechend der Norm ISO 11783 mit dem Zugfahrzeug 2 gekoppelt ist.

Weiters kann vorgesehen sein, dass der Vierkreiselschwader 1 einen linken Wegmesssensor 29 umfasst und einen rechten Wegmesssensor 30 umfasst. Wie aus Fig. 1 ersichtlich, kann vorgesehen sein, dass die Wegmesssensoren 29, 30 mit den Laufrädern 4, 5 gekoppelt sind. In einer alternativen Ausführungsvariante ist es auch denkbar, dass die Wegmesssensoren 29, 30 mit einem Stützrad 31 des jeweiligen Rechkreisels 7, 12, 17, 22 gekoppelt sind. In wieder einer anderen Ausführungsvariante ist es natürlich auch denkbar, dass die Wegmesssensoren 29, 30 mit eigens dafür ausgebildeten linken bzw. rechten Tasträdern gekoppelt sind.

Weiters kann vorgesehen sein, dass der Vierkreiselschwader 1 einen Winkelsensor 32 umfasst, mittels welchem ein Knickwinkel 33 des Zugfahrzeuges 2 relativ zum Tragrahmen 3 erfasst werden kann, um daraus den Kurvenradius einer gefahrenen Kurve berechnen zu können.

In einer Alternativvariante kann vorgesehen sein, dass ein Lenkwinkeleinschlag 53 des Zugfahrzeuges 2 zur Berechnung des Kurvenradius der gefahrenen Kurve herangezogen wird.

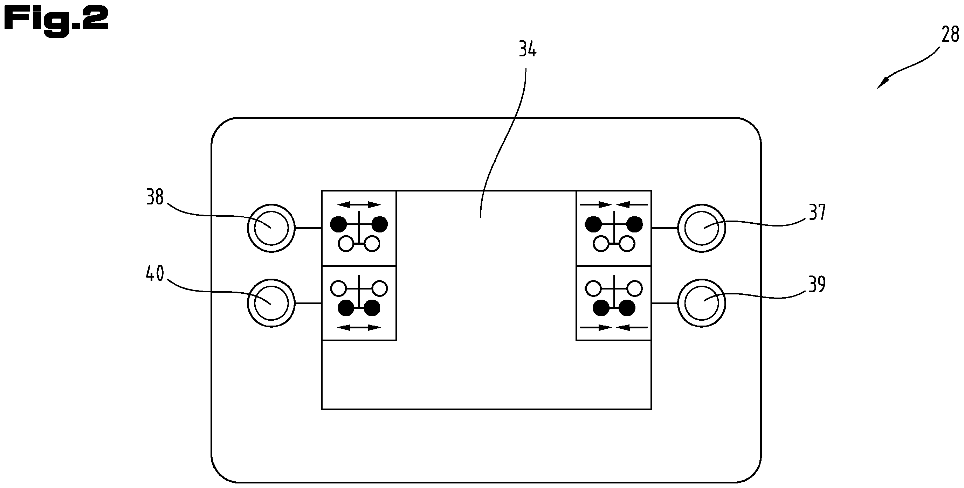

Fig. 2 zeigt ein erstes Ausführungsbeispiel der Bedienerschnittstelle 28. Wie aus Fig. 2 ersichtlich, kann vorgesehen sein, dass die Bedienerschnittstelle 28 ein Grafikdisplay 36 umfasst, welches zur Anzeige von Informationen dient. Weiters kann auch vorgesehen sein, dass das Grafikdisplay 36 in Form eines Touchdisplay ausgebildet ist und somit gleichzeitig zur Eingabe von Informationen in die Bedienerschnittstelle 28 dient. Weiters kann vorgesehen sein, dass die Bedienerschnittstelle 28 einen ersten Eingabetaster 37, einen zweiten Eingabetaster 38, einen dritten Eingabetaster 39 und einen vierten Eingabetaster 40 umfasst, welche zum Eingeben von Befehlen in die Bedienerschnittstelle 28 dienen.

Die Eingabetaster 37, 38, 39, 40 können in Form eines Softkeys ausgebildet sein, welche am Grafikdisplay 36 dargestellten Piktogrammen zugeordnet sein können. Somit ist es denkbar, dass für jeweilig auswählbare Eingabebefehle den Eingabetastern 37, 38, 39, 40 eine unterschiedliche Funktion zugeordnet werden kann.

Wie aus Fig. 2 ersichtlich, kann vorgesehen sein, dass der rechts oben angeordnete Eingabetaster 37 zum Eingeben des Befehls der Verkleinerung des vorderen Rechkreiselabstandes 43 dienen kann.

Weiters kann vorgesehen sein, dass der links oben angeordnete Eingabetaster 38 zum Eingeben des Befehls der Vergrößerung des vorderen Rechkreiselabstandes 43 dienen kann. Weiters kann vorgesehen sein, dass der rechts unten angeordnete Eingabetaster 39 zum Eingeben des Befehls der Verkleinerung des hinteren Rechkreiselabstandes 47 dienen kann. Weiters kann vorgesehen sein, dass der links unten angeordnete Eingabetaster 40 zum Eingeben des Befehls der Vergrößerung des hinteren Rechkreiselabstandes 47 dienen kann.

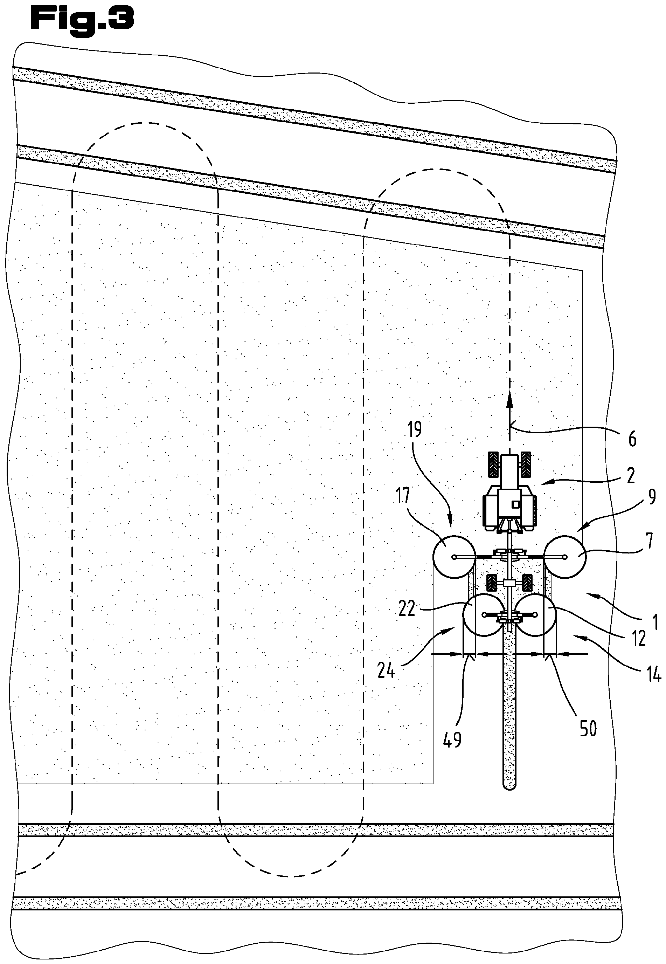

Fig. 3 zeigt in einer Draufsicht eine schematische Darstellung der möglichen Arbeitsplanung zum Schwaden eines Feldes. Wie aus Fig. 3 ersichtlich, kann vorgesehen sein, dass zwischen dem linken vorderen Rechkreisel 17 und dem linken hinteren Rechkreisel 22 eine linke Rechkreiselüberdeckung 49 ausgebildet ist und dass zwischen dem rechten vorderen Rechkreisel 7 und dem rechten hinteren Rechkreisel 12 eine rechte Rechkreiselüberdeckung 50 ausgebildet ist.

Durch Verstellen des vorderen Rechkreiselabstandes 43 bzw. des hinteren Rechkreiselabstandes 47 kann die linke Rechkreiselüberdeckung 49 bzw. die rechte Rechkreiselüberdeckung 50 verstellt werden.

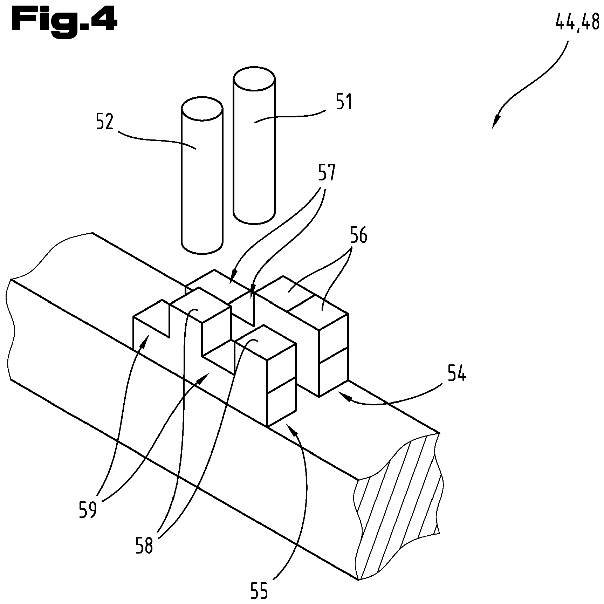

Fig. 4 zeigt in einer perspektivischen Darstellung ein erstes Ausführungsbeispiel der Rechkreiselabstandsensorik 44, 48. Wie aus Fig. 4 ersichtlich, kann die Rechkreiselabstandsensorik 44, 48 einen ersten Induktivsensor 51 und einen zweiten Induktivsensor 52 umfassen. Der erste Induktivsensor 51 kann mit einer ersten Messleiste 54 zusammenwirken. Der zweite Induktivsensor 52 kann mit einer zweiten Messleiste 55 zusammenwirken. Die erste Messleiste 54 kann Erhöhungen 56 bzw. Ausnehmungen 57 aufweisen. Auch die zweite Messleiste 55 kann Erhöhungen 58 und Ausnehmungen 59 aufweisen. Durch die Induktivsensoren 51, 52 kann die aktuelle Position der beiden Messleisten 54, 55 erfasst werden.

### Bezugszeichenaufstellung

| | | | |
|---|---|---|---|
| 1 | Vierkreiselschwader | 24 | Arbeitsstellung linker hinterer Rechkreisel |
| 2 | Zugfahrzeug | 25 | Hubstellung linker hinterer Rech-kreisel |
| 3 | Tragrahmen | | |
| 4 | linkes Laufrad | 26 | vierter Ausschubaktor |
| 5 | rechtes Laufrad | 27 | Steuerung |
| 6 | Arbeitsfahrtrichtung | 28 | Bedienerschnittstelle |
| 7 | rechter vorderer Rechkreisel | 29 | linker Wegmesssensor |
| 8 | erster Hubaktor | 30 | rechter Wegmesssensor |
| 9 | Arbeitsstellung rechter vorderer Rechkreisel | 31 | Stützrad |
| 10 | Hubstellung rechter vorderer Rechkreisel | 32 | Winkelsensor |
| | | 33 | Knickwinkel |
| 11 | erster Ausschubaktor | 34 | Schwad |
| | | 35 | Erntegut |
| 12 | rechter hinterer Rechkreisel | 36 | Grafikdisplay |
| 13 | zweiter Hubaktor | 37 | erster Eingabetaster |
| 14 | Arbeitsstellung rechter hinterer Rechkreisel | 38 | zweiter Eingabetaster |
| | | 39 | dritter Eingabetaster |
| 15 | Hubstellung rechter hinterer Rech-kreisel | 40 | vierter Eingabetaster |
| | | 41 | Mittelpunkt rechter vorderer Rechkreisel |
| 16 | zweiter Ausschubaktor | | |
| 17 | linker vorderer Rechkreisel | 42 | Mittelpunkt linker vorderer Rech-kreisel |
| 18 | dritter Hubaktor | | |
| 19 | Arbeitsstellung linker vorderer Rechkreisel | 43 | vorderer Rechkreiselabstand |
| | | 44 | vordere Rechkreiselabstandsenso-rik |
| 20 | Hubstellung linker vorderer Rechkreisel | | |
| | | 45 | Mittelpunkt rechter hinterer Rech-kreisel |
| 21 | dritter Ausschubaktor | | |
| 22 | linker hinterer Rechkreisel | 46 | Mittelpunkt linker hinterer Rech-kreisel |
| 23 | vierter Hubaktor | | |
| 47 | hinterer Rechkreiselabstand | | |
| 48 | hintere Rechkreiselabstandsensorik | | |
| 49 | linke Rechkreiselüberdeckung | | |
| 50 | rechte Rechkreiselüberdeckung | | |
| 51 | erster Induktivsensor | | |
| 52 | zweiter Induktivsensor | | |
| 53 | Lenkwinkeleinschlag | | |
| 54 | erste Messleiste | | |
| 55 | zweite Messleiste | | |
| 56 | Erhöhung erste Messleiste | | |
| 57 | Ausnehmung erste Messleiste | | |
| 58 | Erhöhung zweite Messleiste | | |
| 59 | Ausnehmung zweite Messleiste | | |

## Patentansprüche

1. Verfahren zum Betreiben eines Mehrkreiselschwaders (1) mit:
- einem Tragrahmen (3) und daran angeordnet zumindest ein linkes Laufrad (4) und zumindest ein rechtes Laufrad (5);
- einen in einer Arbeitsfahrtrichtung (6) rechten vorderen Rechkreisel (7);
- einen in der Arbeitsfahrtrichtung (6) rechten hinteren Rechkreisel (12);
- einen in der Arbeitsfahrtrichtung (6) linken vorderen Rechkreisel (17);
- einen in der Arbeitsfahrtrichtung (6) linken hinteren Rechkreisel (22);
- einer Steuerung (27);
- eine Bedienerschnittstelle (28) zum Eingeben von Eingabebefehlen, wobei die Bedienerschnittstelle (28) mit der Steuerung (27) gekoppelt ist,
wobei ein Mittelpunkt (41) des rechten vorderen Rechkreisels (7) und ein Mittelpunkt (42) des linken vorderen Rechkreisels (17) in einem vorderen Rechkreiselabstand (43) zueinander beabstandet angeordnet sind, wobei eine vordere Rechkreiselabstandsensorik (44) zur Erfassung des vorderen Rechkreiselabstandes (43) ausgebildet ist und wobei ein Mittelpunkt (45) des rechten hinteren Rechkreisels (12) und ein Mittelpunkt (46) des linken hinteren Rechkreisels (22) in einem hinteren Rechkreiselabstand (47) zueinander beabstandet angeordnet sind, wobei eine hintere Rechkreiselabstandsensorik (48) zur Erfassung des hinteren Rechkreiselabstandes (47) ausgebildet ist;
umfassend den Verfahrensschritt
- Überführen des Mehrkreiselschwaders (1) in einen Zustand, in dem sich alle vier Rechkreisel (7, 12, 17, 22) in einer Arbeitsstellung (9, 14, 19, 24) befinden;
**gekennzeichnet durch** die Verfahrensschritte
- Erfassen des vorderen Rechkreiselabstandes (43) mittels der vorderen Rechkreiselabstandsensorik (44) und Erfassen des hinteren Rechkreiselabstandes (47) mittels der hinteren Rechkreiselabstandsensorik (48) und daraus berechnen einer Rechkreiselüberdeckung (49, 50) mittels der Steuerung (27).

2. Verfahren nach Anspruch 1, **gekennzeichnet, durch** den Verfahrensschritt
- Durchführen einer Befehlseingabe in die Bedienerschnittstelle (28) zum Vergrößern des vorderen Rechkreiselabstandes (43), wobei die Vergrößerung des vorderen Rechkreiselabstandes (43) in Abhängigkeit vom hinteren Rechkreiselabstand (47) elektronisch begrenzt ist, sodass eine vordefinierte minimale Rechkreiselüberdeckung (49, 50) zwischen den vorderen Rechkreisel (7, 17) und den hinteren Rechkreisel (12, 22) nicht unterschritten wird.

3. Verfahren nach Anspruch 1 oder 2, **gekennzeichnet, durch** den Verfahrensschritt
- Durchführen einer Befehlseingabe in die Bedienerschnittstelle (28) zum Verkleinern des hinteren Rechkreiselabstandes (47), wobei die Verkleinerung des hinteren Rechkreiselabstandes (47) in Abhängigkeit vom vorderen Rechkreiselabstand (43) elektronisch begrenzt ist, sodass eine vordefinierte minimale Rechkreiselüberdeckung (49, 50) zwischen den vorderen Rechkreisel (7, 17) und den hinteren Rechkreisel (12, 22) nicht unterschritten wird.

4. Verfahren nach einem der vorhergehenden Ansprüche, **dadurch gekennzeichnet, dass** bei Erreichen der vordefinierten minimalen Rechkreiselüberdeckung (49, 50) ein optisches und/oder akustisches Signal ausgegeben wird.

5. Verfahren nach Anspruch 1 oder 2, **gekennzeichnet, durch** den Verfahrensschritt
- Durchführen einer Befehlseingabe in die Bedienerschnittstelle (28) zum Verkleinern des hinteren Rechkreiselabstandes (47), wobei bei der Verkleinerung des hinteren Rechkreiselabstandes (47) automatisiert der vordere Rechkreiselabstand (43) verkleinert wird, sodass eine vordefinierte minimale Rechkreiselüberdeckung (49, 50) zwischen den vorderen Rechkreisel (7, 17) und den hinteren Rechkreisel (12, 22) nicht unterschritten wird.

6. Verfahren nach Anspruch 1 oder 2, **gekennzeichnet, durch** den Verfahrensschritt
- Durchführen einer Befehlseingabe in die Bedienerschnittstelle (28) zum Vergrößern des vorderen Rechkreiselabstandes (43), wobei bei der Vergrößerung des vorderen Rechkreiselabstandes (43) automatisiert der hintere Rechkreiselabstand (47) vergrößert wird, sodass eine vordefinierte minimale Rechkreiselüberdeckung (49, 50) zwischen den vorderen Rechkreisel (7, 17) und den hinteren Rechkreisel (12, 22) nicht unterschritten wird.

7. Verfahren nach einem der vorhergehenden Ansprüche, **dadurch gekennzeichnet, dass** die vordere Rechkreiselabstandsensorik (44) zumindest einen ersten Induktivsensor (51) und einen zweiten Induktivsensor (52) umfasst, wobei mittels der zumindest zwei Induktivsensoren (51, 52) zumindest vier verschiedene Werte von Rechkreiselabständen (43, 47) erfasst werden.

8. Verfahren nach einem der vorhergehenden Ansprüche, **dadurch gekennzeichnet, dass** beim Fahren einer Kurve der vordere Rechkreiselabstand (43), insbesondere in Abhängigkeit von einer Stärke der Kurve, automatisiert verkleinert wird.

9. Verfahren nach Anspruch 8, **dadurch gekennzeichnet, dass** eine Stärke der gefahrenen Kurve durch Ermittlung eines Lenkwinkeleinschlages (53) eines Zugfahrzeuges (2) oder
durch Erfassung eines Knickwinkels (33) eines Zugfahrzeuges (2) relativ zum Tragrahmen (3) mittels eines Winkelsensors (32) oder
durch Auswertung einer Wegdifferenz zwischen einem linken Wegmesssensor (29) und einem rechten Wegmesssensor (30) ermittelt wird,
wobei der vordere Rechkreiselabstand (43) auf Basis der ermittelten Stärke der gefahrenen Kurve eingestellt wird.

10. Verfahren nach Anspruch 8 oder 9, **dadurch gekennzeichnet, dass** beim Fahren der Kurve ausschließlich der kurveninnere vordere Rechkreisel (7, 17) in Richtung zum Tragrahmen (3) gezogen wird.

11. Mehrkreiselschwader (1) mit:
- einem Tragrahmen (3) und daran angeordnet zumindest ein linkes Laufrad (4) und zumindest ein rechtes Laufrad (5);
- einen in einer Arbeitsfahrtrichtung (6) rechten vorderen Rechkreisel (7);
- einen in der Arbeitsfahrtrichtung (6) rechten hinteren Rechkreisel (12);
- einen in der Arbeitsfahrtrichtung (6) linken vorderen Rechkreisel (17);
- einen in der Arbeitsfahrtrichtung (6) linken hinteren Rechkreisel (22);
- einer Steuerung (27);
- eine Bedienerschnittstelle (28) zum Eingeben von Eingabebefehlen, wobei die Bedienerschnittstelle (28) mit der Steuerung (27) gekoppelt ist,
wobei ein Mittelpunkt (41) des rechten vorderen Rechkreisels (7) und ein Mittelpunkt (42) des linken vorderen Rechkreisels (17) in einem vorderen Rechkreiselabstand (43) zueinander beabstandet angeordnet sind, wobei eine vordere Rechkreiselabstandsensorik (44) zur Erfassung des vorderen Rechkreiselabstandes (43) ausgebildet ist und
wobei ein Mittelpunkt (45) des rechten hinteren Rechkreisels (12) und ein Mittelpunkt (46) des linken hinteren Rechkreisels (22) in einem hinteren Rechkreiselabstand (47) zueinander beabstandet angeordnet sind, wobei eine hintere Rechkreiselabstandsensorik (48) zur Erfassung des hinteren Rechkreiselabstandes (47) ausgebildet ist,
**dadurch gekennzeichnet, dass** die Steuerung (27) Befehle umfasst, die den Mehrkreiselschwader (1) zum Durchführen des Verfahrens nach Anspruch 1 veranlassen.

12. Mehrkreiselschwader (1) nach Anspruch 11, **dadurch gekennzeichnet, dass** ein erster Ausschubaktor (11) ausgebildet ist, mittels welchem der vordere Rechkreiselabstand (43) verstellbar ist und dass ein zweiter Ausschubaktor (16) ausgebildet ist, mittels welchem der hintere Rechkreiselabstand (47) verstellbar ist.

13. Mehrkreiselschwader (1) nach Anspruch 12, **dadurch gekennzeichnet, dass** der rechte vordere Rechkreisel (7) mittels des ersten Ausschubaktors (11) verschiebbar ist und dass der rechte hintere Rechkreisel (12) mittels des zweiten Ausschubaktors (16) verschiebbar ist und dass ein dritter Ausschubaktor (21) ausgebildet ist, mittels welchem der linke vordere Rechkreisel (17) verschiebbar ist und dass ein vierter Ausschubaktor (26) ausgebildet ist, mittels welchem der linke hintere Rechkreisel (22) verschiebbar ist.

14. Steuerung (27) für einen Mehrkreiselschwader (1), **dadurch gekennzeichnet, dass** die Steuerung (27) Befehle umfasst, die den Mehrkreiselschwader (1) des Anspruchs 11 zum Durchführen des Verfahrens nach Anspruch 1 veranlassen.

15. Computerprogramm, umfassend Befehle, die bei der Ausführung des Programms durch eine Steuerung (27), diese veranlassen, die Schritte des Verfahrens nach Anspruch 1 auszuführen.

16. Computerlesbares Speichermedium, umfassend Befehle, die bei der Ausführung durch eine Steuerung (27) diese veranlassen, die Schritte des Verfahrens nach Anspruch 1 auszuführen.

## Claims

1. A method for operating a multi-rotor rake (1) having:
- a support frame (3) and at least one left-hand running wheel (4) and at least one right-hand running wheel (5) arranged thereon;
- a right-hand front raking rotor (7) in a working direction of travel (6);
- a right-hand rear raking rotor (12) in the working direction of travel (6);
- a left-hand front raking rotor (17) in the working direction of travel (6);
- a left-hand rear raking rotor (22) in the working direction of travel (6);
- a controller (27);
- an user interface (28) for entering input commands, wherein the user interface (28) is coupled to the controller (27),
wherein a center point (41) of the right-hand front raking rotor (7) and a center point (42) of the left-hand front raking rotor (17) are arranged at a front raking rotor distance (43) from each other, wherein a front raking rotor distance sensor system (44) is configured to detect the front raking rotor distance (43), and
wherein a center point (45) of the right-hand rear raking rotor (12) and a center point (46) of the left-hand rear raking rotor (22) are arranged at a rear raking rotor distance (47) from one another, wherein a rear raking rotor distance sensor system (48) is configured to detect the rear raking rotor distance (47);
comprising the method step of
- transferring the multi-rotor rake (1) into a state in which all four raking rotors (7, 12, 17, 22) are in a working position (9, 14, 19, 24);
**characterized by** the method steps
- detecting the front raking rotor distance (43) by means of the front raking rotor distance sensor system (44) and detecting the rear raking rotor distance (47) by means of the rear raking rotor distance sensor system (48) and calculating a raking rotor overlap (49, 50) therefrom by means of the controller (27).

2. The method according to claim 1, **characterized by** the method step of
- carrying out a command input into the user interface (28) for increasing the front raking rotor distance (43), wherein the increase in the front raking rotor distance (43) is electronically limited depending on the rear raking rotor distance (47), so that a predefined minimum raking rotor overlap (49, 50) between the front raking rotors (7, 17) and the rear raking rotors (12, 22) is not undershot.

3. The method according to claim 1 or 2, **characterized by** the method step of
- carrying out a command input into the user interface (28) for reducing the rear raking rotor distance (47), wherein the reduction in the rear raking rotor distance (47) is electronically limited depending on the front raking rotor distance (43), so that a predefined minimum raking rotor overlap (49, 50) between the front raking rotors (7, 17) and the rear raking rotors (12, 22) is not undershot.

4. The method according to one of the preceding claims, **characterized in that** upon reaching the predefined minimum raking rotor overlap (49, 50), an optical and/or acoustic signal is output.

5. The method according to claim 1 or 2, **characterized by** the method step of
- carrying out a command input into the user interface (28) for reducing the rear raking rotor distance (47), wherein upon the reduction of the rear raking rotor distance (47), the front raking rotor distance (43) is automatically reduced, so that a predefined minimum raking rotor overlap (49, 50) between the front raking rotors (7, 17) and the rear raking rotors (12, 22) is not undershot.

6. The method according to claim 1 or 2, **characterized by** the method step of
- carrying out a command input into the user interface (28) for increasing the front raking rotor distance (43), wherein upon the increase of the front raking rotor distance (47), the rear raking rotor distance (43) is automatically increased, so that a predefined minimum raking rotor overlap (49, 50) between the front raking rotors (7, 17) and the rear raking rotors (12, 22) is not undershot.

7. The method according to one of the preceding claims, **characterized in that** the front raking rotor distance sensor system (44) comprises at least a first inductive sensor (51) and a second inductive sensor (52), wherein at least four different values of raking rotor distances (43, 47) are detected by means of the at least two inductive sensors (51, 52).

8. The method according to one of the preceding claims, **characterized in that**, when driving a curve, the front raking rotor distance (43) is automatically reduced, in particular depending on a strength of the curve.

9. The method according to claim 8, **characterized in that** a strength of the driven curve is determined by determining a steering angle deflection (53) of a towing vehicle (2) or by detecting an articulation angle (33) of a towing vehicle (2) relative to the support frame (3) by means of an angle sensor (32) or
by evaluating a path difference between a left path measuring sensor (29) and a right path measuring sensor (30),
wherein the front raking rotor distance (43) is set on the basis of the determined strength of the curve traveled.

10. The method according to claim 8 or 9, **characterized in that** only the front raking rotor (7, 17) on the inside of the curve is pulled in the direction of the support frame (3) when the curve is travelled.

11. A multi-rotor rake (1) having:
- a support frame (3) and at least one left-hand running wheel (4) and at least one right-hand running wheel (5) arranged thereon;
- a right-hand front raking rotor (7) in a working direction of travel (6);
- a right-hand rear raking rotor (12) in the working direction of travel (6);
- a left-hand front raking rotor (17) in the working direction of travel (6);
- a left-hand rear raking rotor (22) in the working direction of travel (6);
- a controller (27);
- an user interface (28) for entering input commands, wherein the user interface (28) is coupled to the controller (27),
wherein a center point (41) of the right-hand front raking rotor (7) and a center point (42) of the left-hand front raking rotor (17) are arranged at a front raking rotor distance (43) from each other, wherein a front raking rotor distance sensor system (44) is configured to detect the front raking rotor distance (43), and
wherein a center point (45) of the right-hand rear raking rotor (12) and a center point (46) of the left-hand rear raking rotor (22) are arranged at a rear raking rotor distance (47) from one another, wherein a rear raking rotor distance sensor system (48) is configured to detect the rear raking rotor distance (47),
**characterized in that** the controller (27) comprises commands which cause the multi-rotor rake (1) to perform the method according to claim 1.

12. The multi-rotor rake (1) according to claim 11, **characterized in that** a first extension actuator (11) is formed, by means of which the front raking rotor distance (43) can be adjusted, and that a second extension actuator (16) is formed, by means of which the rear raking rotor distance (47) can be adjusted.

13. The multi-rotor rake (1) according to claim 12, **characterized in that** the right-hand front raking rotor (7) is displaceable by means of the first extension actuator (11) and that the right-hand rear raking rotor (12) is displaceable by means of the second extension actuator (16) and that a third extension actuator (21) is formed, by means of which the left-hand front raking rotor (17) is displaceable and that a fourth extension actuator (26) is formed by means of which the left-hand rear raking rotor (22) is displaceable.

14. A controller (27) for a multi-rotor rake (1), **characterized in that** the controller (27) comprises commands which cause the multi-rotor rake (1) of claim 11 to perform the method according to claim 1.

15. A computer program, comprising commands, which, upon execution of the program by a controller (27), cause the controller (27) to perform the steps of the method according to claim 1.

16. A computer-readable storage medium, comprising commands which, upon execution by a controller (27), cause the controller (27) to perform the steps of the method according to claim 1.

## Revendications

1. Procédé de fonctionnement d'une andaineuse multi-rotor (1) avec :
- un châssis porteur (3) et au moins une roue gauche (4) et ou moins une roue droite (5), disposées sur celui-ci ;
- un rotor râteleur avant droit (7) dans le sens de déplacement de travail (6) ;
- un rotor râteleur arrière droit (12) dans le sens de déplacement de travail (6) ;
- un rotor râteleur avant gauche (17) dans le sens de déplacement de travail (6) ;
- un rotor râteleur arrière gauche (22) dans le sens de déplacement de travail (6) ;
- une commande (27) ;
- une interface utilisateur (28) pour l'entrée d'instructions, dans lequel l'interface utilisateur (28) est couplée avec la commande (27),
dans lequel un centre (41) du rotor râteleur avant droit (7) et un centre (42) du rotor râteleur avant gauche (17) sont disposés de manière distante entre eux avec une distance entre les rotors râteleurs avant (43), dans lequel des capteurs de distance entre les rotors râteleurs avant (44) sont conçus pour la mesure de la distance entre les rotors râteleurs avant (43) et
dans lequel un centre (45) du rotor râteleur arrière droit (12) et un centre (46) du rotor râteleur arrière gauche (22) sont disposés de manière distante entre eux avec une distance entre les rotors râteleurs arrière (47), dans lequel des capteurs de distance entre les rotors râteleurs arrière (48) sont conçus pour la mesure de la distance entre les rotors râteleurs arrière (47) ;
comprenant l'étape suivante :
- passage de l'andaineuse multi-rotor (1) dans un état dans lequel les quatre rotors râteleurs (7, 12, 17, 22) se trouvent dans une position de travail (9, 14, 19, 24) ;
**caractérisé par** les étapes suivantes :
- mesure de la distance entre les rotors râteleurs avant (43) au moyen des capteurs de distance entre les rotors râteleurs avant (44) et mesure de la distance entre les rotors râteleurs arrière (47) au moyen des capteurs de distance entre les rotors râteleurs arrière (48) et calcul, à partir de celles-ci, d'un chevauchement des rotors râteleurs (49, 50) au moyen de la commande (27).

2. Procédé selon la revendication 1, **caractérisé par** l'étape suivante
- réalisation d'une entrée d'instruction dans l'interface utilisateur (28) afin d'augmenter la distance entre les rotors râteleurs avant (43), dans lequel l'augmentation de la distance entre les rotors râteleurs avant (43) est limitée électroniquement en fonction de la distance entre les rotors râteleurs arrière (47), de sorte qu'un chevauchement des rotors râteleurs (49, 50) minimal prédéfini entre les rotors râteleurs avant (7, 17) et les rotors râteleurs arrière (12, 22) n'est pas dépassé.

3. Procédé selon la revendication 1 ou 2, **caractérisé par** l'étape suivante :
- réalisation d'une entrée d'instruction dans l'interface utilisateur (28) afin de diminuer la distance entre les rotors râteleurs arrière (47), dans lequel la diminution de la distance entre les rotors râteleurs arrière (47) est limitée électroniquement en fonction de la distance entre les rotors râteleurs avant (43), de sorte qu'un chevauchement des rotors râteleurs (49, 50) minimal prédéfini entre les rotors râteleurs avant (7, 17) et les rotors râteleurs arrière (12, 22) n'est pas dépassé.

4. Procédé selon l'une des revendications précédentes, **caractérisé en ce que**, lorsque le chevauchement des rotors râteleurs (49, 50) minimal prédéfini est atteint, un signal optique et/ou acoustique est émis.

5. Procédé selon la revendication 1 ou 2, **caractérisé par** l'étape suivante :
- réalisation d'une entrée d'instruction dans l'interface utilisateur (28) afin de diminuer la distance entre les rotors râteleurs arrière (47), dans lequel, lors de la diminution de la distance entre les rotors râteleurs arrière (47), la distance entre les rotors râteleurs avant (43) est automatiquement diminuée, de sorte qu'un chevauchement des rotors râteleurs (49, 50) minimal prédéfini entre les rotors râteleurs avant (7, 17) et les rotors râteleurs arrière (12, 22) n'est pas dépassé.

6. Procédé selon la revendication 1 ou 2, **caractérisé par** l'étape suivante :
- réalisation d'une entrée d'instruction dans l'interface utilisateur (28) afin d'augmenter la distance entre les rotors râteleurs avant (43), dans lequel, lors de l'augmentation de la distance entre les rotors râteleurs avant (43), la distance entre les rotors râteleurs arrière (47) est automatiquement augmentée, de sorte qu'un chevauchement des rotors râteleurs (49, 50) minimal prédéfini entre les rotors râteleurs avant (7, 17) et les rotors râteleurs arrière (12, 22) n'est pas dépassé.

7. Procédé selon l'une des revendications précédentes, **caractérisé en ce que** les capteurs de distance entre les rotors râteleurs avant (44) comprend au moins un premier capteur inductif (51) et un deuxième capteur inductif (52), dans lequel, au moyen des au moins deux capteurs inductifs (51, 52), au moins quatre valeurs différentes de distances entre les rotors râteleurs (43, 47) sont mesurées.

8. Procédé selon l'une des revendications précédentes, **caractérisé en ce que**, lors du parcours d'une courbe, la distance entre les rotors râteleurs avant (43) est diminuée de manière automatisée, plus particulièrement en fonction d'une intensité de la courbe.

9. Procédé selon la revendication 8, **caractérisé en ce qu'**une intensité de la courbe parcourue est déterminée par la détermination d'un angle de braquage (53) d'un véhicule tracteur (2) ou
par la mesure d'un angle de pliage (33) d'un véhicule tracteur (2) par rapport au châssis porteur (3) au moyen d'un capteur d'angle (32) ou
par l'analyse d'une différence de course entre un capteur de mesure de course gauche (29) et un capteur de mesure de course droit (30),
dans lequel la distance entre les rotors râteleurs avant (43) est ajustée sur la base de l'intensité déterminée de la courbe parcourue.

10. Procédé selon la revendication 8 ou 9, **caractérisé en ce que**, lors du parcours de la courbe, exclusivement le rotor râteleur avant à l'intérieur de la courbe (7, 17) est tiré en direction du châssis porteur (3).

11. Andaineuse multi-rotor (1) avec :
- un châssis porteur (3) et au moins une roue gauche (4) et au moins une roue droite (5), disposées sur celui-ci ;
- un rotor râteleur avant droit (7) dans le sens de déplacement de travail (6) ;
- un rotor râteleur arrière droit (12) dans le sens de déplacement de travail (6) ;
- un rotor râteleur avant gauche (17) dans le sens de déplacement de travail (6) ;
- un rotor râteleur arrière gauche (22) dans le sens de déplacement de travail (6) ;
- une commande (27) ;
- une interface utilisateur (28) pour l'entrée d'instructions, dans lequel l'interface utilisateur (28) est couplée avec la commande (27),
dans lequel un centre (41) du rotor râteleur avant droit (7) et un centre (42) du rotor râteleur avant gauche (17) sont disposés de manière distante entre eux avec une distance entre les rotors râteleurs avant (43), dans lequel des capteurs de distance entre les rotors râteleurs avant (44) sont conçus pour la mesure de la distance entre les rotors râteleurs avant (43) et
dans lequel un centre (45) du rotor râteleur arrière droit (12) et un centre (46) du rotor râteleur arrière gauche (22) sont disposés de manière distante entre eux avec une distance entre les rotors râteleurs arrière (47), dans lequel des capteurs de distance entre les rotors râteleurs arrière (48) sont conçus pour la mesure de la distance entre les rotors râteleurs arrière (47),
**caractérisée en ce que** la commande (27) comprend des instructions qui font en sorte que l'andaineuse multi-rotor (1) exécute le procédé selon la revendication 1.

12. Andaineuse multi-rotor (1) selon la revendication 11, **caractérisée en ce qu'**un premier actionneur d'extension (11) est prévu, au moyen duquel la distance entre les rotors râteleurs avant (43) peut être réglée et **en ce qu'**un deuxième actionneur d'extension (16) est prévu, au moyen duquel la distance entre les rotors râteleurs arrière (47) peut être réglée.

13. Andaineuse multi-rotor (1) selon la revendication 12, **caractérisée en ce que** le rotor râteleur avant droit (7) peut être déplacé au moyen du premier actionneur d'extension (11) et **en ce que** le rotor râteleur arrière droit (12) peut être déplacé au moyen du deuxième actionneur d'extension (16) et **en ce qu'**un troisième actionneur d'extension (21) est prévu, au moyen duquel le rotor râteleur avant gauche (17) peut être déplacé et **en ce qu'**un quatrième actionneur d'extension (26) est prévu, au moyen duquel le rotor râteleur arrière gauche (22) peut être déplacé.

14. Commande (27) pour une andaineuse multi-rotor (1), **caractérisée en ce que** la commande (27) comprend des instructions qui font en sorte que l'andaineuse multi-rotor (1) de la revendication 11 exécute le procédé selon la revendication 1.

15. Programme informatique comprenant des instructions qui, lors de l'exécution du programme par une commande (27), font en sorte que celle-ci exécute les étapes du procédé selon la revendication 1.

16. Moyen de stockage lisible par un ordinateur, comprenant des instructions qui, lors de l'exécution par une commande (27), font en sorte que celle-ci exécute les étapes du procédé selon la revendication 1.
